# EUROPEAN PATENT APPLICATION

(11) **EP 0 901 196 A2**
(43) Date of publication of application: **10.03.1999**
(21) Application number: 98306783.6
(22) Date of filing: 25.08.1998
(51) Int. Cl.: H01R 13/629

(54) **Connector mating detection device for fail-safe high power operation system**

(30) Priority: 05.09.1997 US 924331
(71) Applicant: LUCENT TECHNOLOGIES INC., Murray Hill, New Jersey 07974-0636 (US)
(72) Inventor: Chavez, Francisco H., Dallas, Texas 75227 (US); Jacobs, Mark E., Dallas, Texas 75248 (US); He, Jin, Plano, Texas 75025 (US); Lee, Victor K., Plano, Texas 75093 (US)
(74) Representative: Johnston, Kenneth Graham

(57) **Abstract**

The present invention provides, for use in a power system, a connector mating detection device for detecting whether power connectors having a predetermined length and adapted to conduct power therethrough have successfully mated. In one embodiment, the connector mating detection device includes: (1) first and second pins, having a length less than the predetermined length to prevent the first and second pins from electrically contacting counterpart first and second receptacles until the power connectors have made substantial electrical contact and (2) a detection circuit that senses when the first and second pins and receptacles have cooperated to form a continuous circuit, the continuous circuit indicating that the power connectors have made substantial electrical contact.

## Description

### Technical Field of the Invention

The present invention is directed, in general, to a connector for a high power operation system and, more specifically, to a fail-safe connector mating detection device for a field-pluggable, high power distribution system.

### Background of the Invention

The rapid expansion of telecommunications is one of the most impressive technological advancements that has occured within the last several decades. Industry, commerce and individuals alike rely extensively on various types of telecommunications systems, such as telephones, pagers, celluar and digital mobile phones and facsimile transmissions that are transmitted over a vast telecommunications network to place orders, contact sales representatives and employees, and conduct personal matters. Literally millions of telephone calls are placed daily with a reliability which is generally taken for granted. This reliability is assured in part by the use of redundant equipment and power systems. Telecommunication switching systems route a substantially large number of calls per second. The failure of such systems, due to either equipment breakdown or loss of power, is unacceptable since, it would result in a significant number of interruptions of telephone calls and a corresponding loss of revenue.

Equipment breakdown is addressed in the telecommunications industry by employing multiple components operating in parallel such that if one component fails, the telephone calls are automatically routed to parallel equipment. Since virtually all systems experience some form of failure, system components are designed to be both "field-pluggable" and "hot-pluggable," i.e., a faulty component can be removed and replaced by field maintenance personnel without shutting the system down. Power distribution systems address the power loss problem by providing the telecommunication system with multiple parallel rectifiers which supply the load circuit and charge a secondary source of power, batteries. In the event of the loss of the rectifiers or their alternating current ("AC") power source, the batteries power the telecommunication system while repairs are made.

High power (amperage) DC systems known as battery plants are used to provide the necessary capacity for the enormous size of present day telecommunications systems. Each battery plant includes a plurality of batteries, rectifiers, protection devices (e.g., circuit breakers or fuses), and other power distribution equipment (e.g., cabling or bus bars). Due to the enormous physical size of the equipment, the batteries are generally located in a battery room, while the rectifiers are located in a power center, some distance away.

The primary DC power source is produced by the rectifiers, which convert three-phase AC line voltage into a DC voltage to simultaneously power the load and to maintain and charge the backup batteries. Multiple rectifiers provide the high amperage necessary for system operation and redundancy to minimize system failure. The rectifiers and some other electrical components in the power center are typically field-pluggable (maintainable by field personnel) and hot-pluggable (power-on removal and replacement) for ease of maintenance. During this maintenance, removing and replacing rectifiers may apply high power to electrical contacts which are not completely mated.

High power systems, while necessary in this application, have certain inherent problems. The most serious of these problems is the likelihood of arcing between electrical contacts which are not completely mated. As used intentionally in an electric welder or carbon arc lamp, high current will jump a gap between the electrical contacts, creating an arc. These arcs are constructively used for welding or to produce intense light. However, in the case of the power center the arc proceeds to rapidly erode or burn the contacts, or in some cases may cause a fire. Thus, the combination of high power circuits and hot-pluggable components produce conditions where arcing can occur between mating parts of connectors when components are removed or replaced.

Accordingly, what is needed in the art is a fail-safe device that will prevent application of high power to the rectifier circuit if the power contacts are not completely

According to one aspect of the present invention, there is provided for use in a power system, a connector mating detection device for detecting whether power connectors having a predetermined length and adapted to conduct power therethrough have successfully mated, comprising: first and second pins, having a length less than said predetermined length to prevent said first and second pins from electrically contacting counterpart first and second receptacles until said power connectors have made substantial electrical contact; and a detection circuit that senses when said first and second pins and receptacles have cooperated to form a continuous circuit, said continuous circuit indicating that said power connectors have made substantial electrical contact. The said first and second pins and said counterpart first and second receptacles can form a loop-back circuit when said first and second pins and receptacles have cooperated to form said continuous circuit. The said power connectors can comprise spatially separated power input pins and power output pins and said first pin can be adjacent to said power input pins and said second pin can be adjacent to said power output pin. The said first and second pins can be electrically connected to said counterpart first and second receptacles when said power connectors have made said substantial electrical contact with an electrical bus within said power system. The device can further comprise a modular rack having a back plate, and said electrical bus can be electrically coupled to said back plate, said counterpart first and second receptacles can be coupled to said back plate and said first and second pins can be coupled to a system-compatible module. The said detection circuit can be electrically coupled to a current control device, the said current control device can be a microprocessor or a logic circuit, said current control device can be designed to allow a flow of electrical current through said power system when said power connectors are in substantial electrical contact.

According to another aspect of the present invention, there is provided for use in a power system, a method of detecting whether power connectors having a predetermined length and adapted to conduct power therethrough have successfully mated, comprising the steps of: preventing first and second pins, having a length less than said predetermined length, from electrically contacting counterpart first and second receptacles until said power connectors have made substantial electrical contact: and sensing when said first and second pins and receptacles have cooperated to form a continuous circuit, said continuous circuit indicating that said power connectors have made substantial electrical contact. The said first and second pins and said counterpart first and second receptacles can form a loop-back circuit when said first and second pins and receptacles have cooperated to form said continuous circuit. The said power connectors can comprise spatially separated power input pins and power output pins and said first pin can be adjacent to said power input pins and said second pin can be adjacent to said power output pin. The said first and second pins can be electrically connected to said counterpart first and second receptacles when said power connectors have made said substantial electrical contact with an electrical bus within said power system. The said power system can comprise a modular rack having a back plate when said electrical bus is electrically coupled to said back plate, said counterpart first and second receptacles can be coupled to said back plate and said first and second pins can be coupled to a system-compatible module. The said detection circuit can be electrically coupled to a current control device, and said current control device can be a microprocessor or a logic circuit, said current control device can be designed to allow a flow of electrical current through said power system when said power connectors are in substantial electrical contact.

According to a further aspect of the present invention, there is provided a modular high-power distribution system, comprising: a modular rack having a back plate and configured to receive a system-compatible module therein: counterpart first and second receptacles coupled to said back plate and configured to receive pins therein; an electrical bus electrically coupled to said back plate; and a connector mating detection device for detecting whether power connectors having a predetermined length and adapted to couple said system-compatible module to said electrical bus have successfully mated, including; a connector support structure coupled to said system-compatible module; first and second pins, extending from said connector support structure and having a length less than said predetermined length to prevent said first and second pins from electrically contacting said counterpart first and second receptacles until said power connectors have made substantial electrical contact with said electrical bus; and a detection circuit that senses when said first and second pins and receptacles have cooperated to form a continuous circuit, said continuous circuit indicating that said power connectors have made substantial electrical contact with said electrical bus. The said first and second pins and said counterpart first and second receptacles can form a loop-back circuit when said first and second pins and receptacles have cooperated to form said continuous circuit. The said power connectors can comprise spatially separated power input pins and power output pins when said first pin is adjacent to said power input pins and said second pin is adjacent to said power output pin. The said first and second pins can be electrically connected to said counterpart first and second receptacles when said power connectors have made said substantial electrical contact with said electrical bus. The said detection circuit can be electrically coupled to a current control device, when said current control device is a microprocessor or a logic circuit that is designed to allow a flow of electrical current through said modular power distribution system when said power connectors are in substantial electrical contact with said electrical bus.

According to an even further aspect of the present invention, there is provided for use in a modular power distribution system having an electrical bus therein, a connector mating detection device for detecting whether power connectors having a predetermined length and adapted to couple a system-compatible module to said electrical bus have successfully mated, comprising: a connector support structure; a pin extending from said connector support structure and having a length less than said predetermined length to prevent said pin from electrically contacting a counterpart pin receptacle until said power connectors have made substantial electrical contact with said electrical bus; and a detection circuit that senses when said pin and receptacle have cooperated to form a continuous circuit, said continuous circuit indicating that said power connectors have made substantial electrical contact with said electrical bus. The device can further comprise a ground pin configured to be received in said ground receptacle, said pin, pin receptacle, ground pin and ground receptacle forming a loop-back circuit when said pin is received in said pin receptacle and said ground pin is received in said ground receptacle to form said continuous circuit. The said power connectors can comprise spatially separated power input pins and power output pins and said pin can be adjacent to either of said power input pins or power output pins. The said pin can be electrically connected to said pin receptacle when said power connectors have made said substantial electrical contact with said electrical bus. The device can further comprise a modular rack having a back plate wherein said electrical bus is electrically coupled to said back plate and said pin receptacle is coupled to said back plate, and said pin is coupled to said system-compatible module. The said detection circuit can be electrically coupled to a current control device, when said current control device is a microprocessor or logic circuit that is designed to allow a flow of electrical current through said modular power distribution system when said power connectors are in substantial electrical contact with said electrical bus.

According to an even further still aspect of the present invention, there is provided for use in a modular power distribution system having an electrical bus therein, a connector mating detection device for detecting whether power connectors having a predetermined length and adapted to couple a system-compatible module to said electrical bus have successfully mated, comprising: a connector support structure; first and second pins, extending from said connector support structure and having a length less than said predetermined length to prevent said first and second pins from electrically contacting counterpart first and second receptacles until said power connectors have made substantial electrical contact with said electrical bus; and a detection circuit that senses when said first and second pins and receptacles have cooperated to form a continuous circuit, said continuous circuit indicating that said power connectors have made substantial electrical contact with said electrical bus. The said first and second receptacles can be electrically coupled together. The said first and second pins and said counterpart first and second receptacles can form a loop-back when said first and second pins and receptacles have cooperated to form said continuous circuit. The said power connectors can comprise spatially separated power input pins and power output pins and said first pin can be adjacent to said power input pins and said second pin can be adjacent to said power output pin. The said first and second pins can be electrically connected to said counterpart first and second receptacles when said power connectors have made said substantial electrical contact with said electrical bus. The device can further comprise a modular rack having a back plate when said electrical bus is electrically coupled to said back plate and said counterpart first and second receptacles are coupled to said back plate, and said first and second pins are coupled to said system-compatible module. The said detection circuit can be electrically coupled to a current control device, when said current control device is a microprocessor or a logic circuit, said current control device can be designed to allow a flow of electrical current through said modular power distribution system when said power connectors are in substantial electrical contact with said electrical bus.

According a still further aspect of the present invention, there is provided for use in a modular power distribution system having an electrical bus therein, a method of detecting whether power connectors having a predetermined length and adapted to couple a system-compatible module to said electrical bus have successfully mated. comprising the steps of: preventing first and second pins. extending from a connector support structure and having a length less than said predetermined length, from mating with counterpart first and second receptacles until said power connectors have made substantial electrical contact; and sensing when said first and second pins and receptacles have cooperated to form a continuous circuit, said continuous circuit indicating that said power connectors have been successfully mated. The said step of sensing can include sensing through said first and second receptacles that are electrically coupled together. The said step of sensing can include sensing through a loop-back formed by said first and second pins and said counterpart first and second receptacles when said first and second pins and receptacles have cooperated to form said continuous circuit. The said power connectors can comprise spatially separated power input pins and power outpins and said step of preventing includes the step of coupling said first pin to said counterpart first receptacle adjacent said power input pin and coupling said second pin to said counterpart second receptacle adjacent said power output pin. The said step of preventing can include the step of fully seating said first and second pins in said counterpart first and second receptacles when said power connectors have made said substantial electrical contact with said electrical bus. The said step of preventing can include the step of electrically coupling said first and second pins coupled to said system-compatible module to said counterpart first and second receptacles coupled to a back plate of a modular rack, when said electrical bus is electrically coupled to said back plate. The said step of sensing can include the step of sensing through a detection circuit that is electrically coupled to a current control device, when said current control device is a microprocessor or logic circuit designed to allow a flow of electrical current through said modular power distribution system when said power connectors are in substantial electrical contact with said electrical bus.

To address the above-discussed deficiencies of the prior art, the present invention provides, for use in a power system, a connector mating detection device for detecting whether power connectors having a predetermined length and adapted to conduct power therethrough have successfully mated. In one embodiment, the connector mating detection device includes first and second pins. having a length less than the predetermined length to prevent the first and second pins from electrically contacting counterpart first and second receptacles until the power connectors have made substantial electrical contact. The device further includes a detection circuit that senses when the first and second pins and receptacles have cooperated to form a continuous circuit. The presence of the continuous
circuit indicates that the power connectors have made substantial electrical contact.

Thus, a broad aspect of one embodiment of the present invention provides for a connector mating detection device that assures that power connectors are in substantial electrical contact with an electrical bus. This particular aspect of the present invention substantially reduces the possiblity of arcing and burn-out of the power connectors that arise when they are not in substantial contact with the electrical bus. As used herein, the phrase "substantial electrical contact" means that the power connectors are connected to the electrical bus sufficiently such that they are capable of conducting their designed amount of amperage without excessively heating, arcing or burning out the power connectors or causing damage to the connector mating detection device in general.

In another embodiment, the first and second receptacles are electrically coupled together directly. However, in other embodiments, the first and second receptacles may be electrically coupled indirectly by way of other configurations. For example, in one embodiment, the first and second pins and the counterpart first and second receptacles may form a loop-back circuit when the first and second pins and receptacles have cooperated to form the continuous circuit.

In yet another embodiment, the power connectors comprise spatially separated power input pins and power output pins wherein the first pin is adjacent to the power input pins and the second pin is adjacent to the power output pins. The location of the first and second pins adjacent to the spatially separated power input and output pins substantially insures that each of the power input and output pins are in substantial electrical contact. In one advantageous embodiment, the first and second pins are spaced diagonally from each other and adjacent their respective power connectors. However, it is, of course, readily apparent that other spatial configurations may also be employed with respect to both the power connectors and the first and second pins.

In another embodiment, the first and second pins are electrically connected to the counterpart first and second receptacles when the power connectors have made substantial electrical contact with the electrical bus.

In yet another embodiment, the power distribution system further comprises a modular rack having a back plate wherein the electrical bus is electrically coupled to the back plate. The counterpart first and second receptacles are coupled to the back plate, and the first and second pins are coupled to the system-compatible module. This particular embodiment may have particular application in modular power distribution systems, such as those having modular rectifiers that are removable from a rack. In such embodiments, the first and second pins, as well as the power connectors, are coupled to the system-compatible module, e.g., the modular rectifier, and the counterpart first and second receptacles are coupled to the back plate.

In another aspect of this particular embodiment, the detection circuit is electrically coupled to a current control device that is designed to allow a flow of electrical current through the modular power distribution system when the power connectors are in substantial electrical contact with the electrical bus. In an alternative embodiment, the current control device may be implemented in various ways. For example, the current control device may send a signal to a remote indicator panel that alerts an operator that the power connectors have not made subtantial contact, or it may produce an audible or visual signal.

In another embodiment, the power distribution system includes a pin extending from the connector support structure and has a length less than the predetermined length to prevent the pin from electrically contacting a counterpart pin receptacle until the power connectors have made substantial electrical contact with the electrical bus, and a detection circuit that senses when the pin and receptacle have cooperated to form a continuous circuit. The continuous circuit indicates that the power connectors have made substantial electrical contact with the electrical bus.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description of the Drawings

For a more complete understanding of the present invention, reference is now made to the following descriptions taken in conjunction with the accompanying drawings, in which:
FIGURE 1 illustrates a schematic system diagram of a telecommunications power distribution system;
FIGURE 2 illustrates a back-end view of an exemplary system-compatible module;
FIGURE 3A illustrates an exemplary switch-mode rectifier input/output connector;
FIGURE 3B illustrates a mating back plate connector for the input/output connector of FIGURE 3A; and
FIGURE 4 illustrates a cross-sectional view of the rectifier input/output connector of FIGURE 3A taken along lines 4A-4A and a sectional view of the back plate connector of FIGURE 3B taken along lines 4B-4B.

### Detailed Description

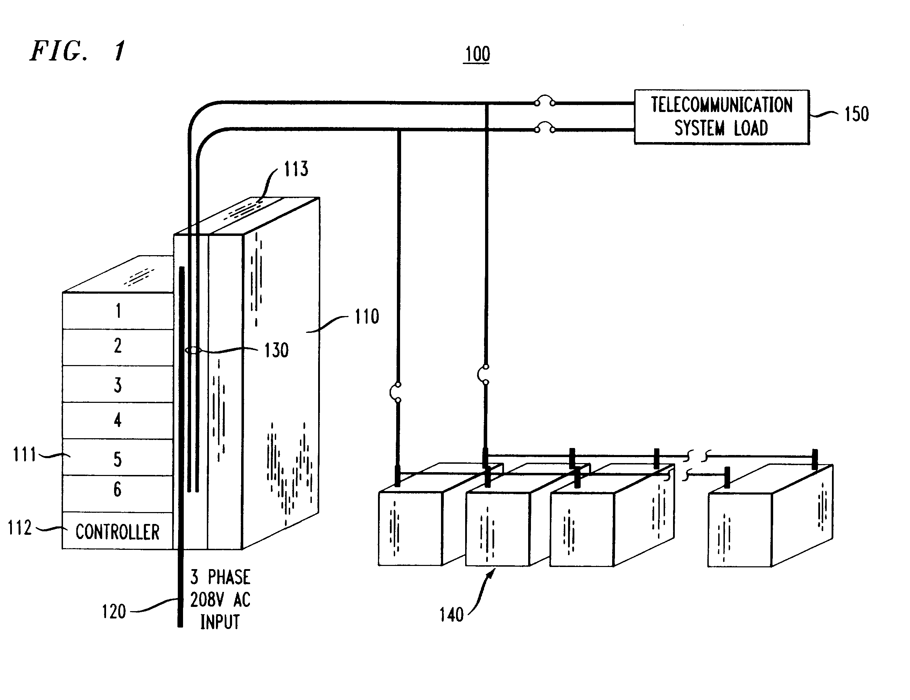

Referring initially to FIGURE 1, illustrated is a schematic system diagram of an exemplary telecommunications modular power distribution system. In a preferred embodiment, the power system, generally designated 100, comprises a modular, multi-place, switch-mode rectifier rack 110, an AC electrical bus 120, a DC electrical bus 130, and battery bank 140. The modular rectifier rack 110 comprises a plurality of switch-mode rectifiers 111, which are numbered one through six, and a controller 112. Three phase AC power from a commercial power system is supplied by way of the AC electrical bus 120 to the plurality of rectifiers 111 in the modular rack 110. The battery bank 140 comprises a plurality of batteries capable of powering the telecommunications system 150 in the event of primary AC power interruption or complete failure of the rectifiers 111.

In the illustrated embodiment, commercial three phase, 208V, AC power is supplied to the system AC electrical bus 120 and is available to the rectifiers through a back plate 113 mounted on the modular rectifier rack 110. High amperage DC power from the rectifiers is fed through the back plate 113 of the modular rack 110 to the communication load 150 and the battery bank 140. Thus, all electrical connections between the rectifiers 111 and the rack 110 are made through mating receptacles (not shown) mounted on the back plate 113 of the modular rack 110.

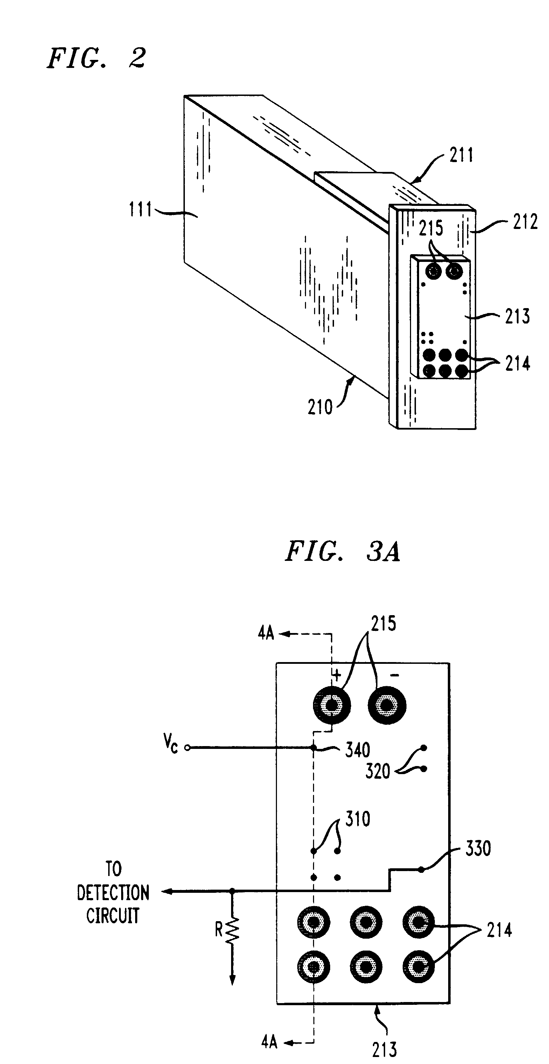

Turning now to FIGURE 2, there is illustrated a back-end view of an exemplary system-compatible module 210. Mounted to each switch-mode rectifier 111 is a connector support structure 211 that comprises principally an input/output circuit board 212 and a power connector 213. In one particular embodiment, the power connector 213 is an ELCON top drawer power connector that comprises a plurality of AC input pins 214 and a singular pair of DC output pins 215 that are mounted to the rectifier input/output circuit board 212. Individual rectifiers 111 are connected to the power system through the power connector 213 and a mating power connector (not shown) on the back plate 113 (see FIGURE 1). The high current capable connector 213 is both hot-pluggable (power on) and field-pluggable (maintainable by field personnel).

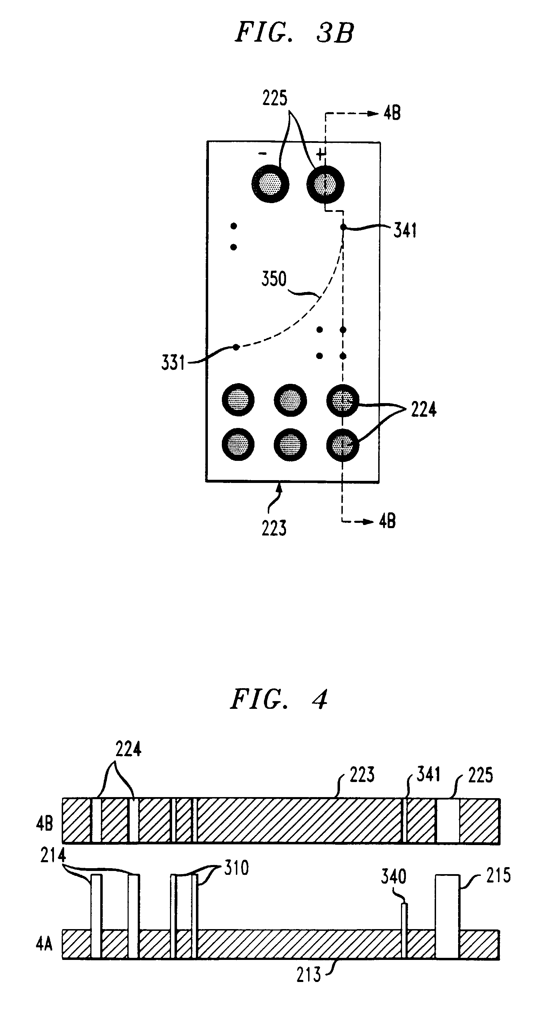

Turning now to FIGURE 3A and FIGURE 3B, there is further illustrated the exemplary switch-mode rectifier input/output connector 213 and its mating back plate connector 223. Additional electrical connections between the rectifier 111 and the back plate 113 are provided through a plurality of chassis ground pins 310 and serial communication pins 320.

One advantageous embodiment includes detection pins 330 and 340 that extend from the power connector 213 of the system compatible module 210. The detection pins 330, 340 are designed to contact their respective first and second receptacles 331, 341 in the connector 223 attached to the back plate 113. The first and second receptacles 331, 341 are electrically connected through the back plate 113. The electrical path is represented by the dashed line 350.

In an alternative embodiment (not shown), the detection circuit may be completed by the use of only one detection pin. In this embodiment, the single receptacle 341 on the back plate connector 223 is electrically connected to the chassis ground. The current control device monitors current flow between the single detection pin 340 and chassis ground and detects an open circuit and prevents power application to the rectifier 111 until the single detection pin 340 makes contact with the corresponding receptacle 341.

Turning now to FIGURE 4, illustrated is a cross-sectional view of the rectifier input/output connector 213 of FIGURE 3A taken along lines 4A-4A and a sectional view of the back plate connector 223 of FIGURE 3B taken along lines 4B-4B. The first and second detection pins 330, 340 are shorter than the predetermined length of the AC input pins 214 and DC output pins 215. This length differential prevents the detection pins 330, 340 from electrically contacting their counterpart first and second receptacles 331, 341 until after substantial contact of the AC input pins 214 and DC output pins 215 with their counterpart receptacles 224, 225 has been established. Substantial contact of the AC input pins 214 and DC output pins 215 with their counterpart receptacles 224, 225 is that which enables the AC and DC pins 214, 215 and their corresponding receptacles 224, 225 to carry their designed current load without arcing or causing damage to the device.

One advantageous embodiment may include a current control device, such as a microprocessor or logic circuit (not shown), associated with the system compatible module 210 that monitors the detection circuit and controls the operation of the rectifier 111. When the current control device senses the detection circuit is "open", it prevents AC input power from flowing to the rectifier 111.

As the connector 213 of the system compatible module 210 is installed to the mating connector 223 on the back plate 113, AC input pins 214 and DC output pins 215 initially contact their counterpart receptacles 224, 225 on the mating back plate connector 223. In the preferred embodiment, although the AC and DC connectors have achieved some partial mating and, therefore, electrical continuity, AC current is prevented from flowing to the rectifier 111 by the current control device which senses that the detection circuit is still "open."

Continuing now to refer to FIGURES 3A, 3B and 4, the current control device detects an "open" in the detection circuit until a system compatible module 210 is installed on the back plate 113 and the detection pins 330, 340 make contact with their corresponding receptacles 331, 341 in the connector 223 of the back plate 113. In one embodiment, the detection circuit is completed through the electrical connection 350 on contact of the detection pins 330, 340 with their corresponding receptacles 331, 341, which forms a loop-back circuit through the back plate 113 and allows a current flow in the detection circuit. Upon detecting current flow, the current control device applies AC power from the bus 120 to the rectifier 111, which then provides DC power to the load 150 and battery 140 charging circuits.

In another embodiment, the first detection pin 330 is located in proximity to the AC input pins 214 and the second detection pin 340 is located in proximity to the DC output pins 215. In one particular advantageous embodiment, the first and second detection pins 330, 340 and their mating receptacles 331, 341 are located diagonally across the face of the connector 213, 223. By positioning the pins in this manner, the connectors 213, 223 are fully seated and current can flow in the detection circuit.

From the foregoing, it is readily seen that the present invention provides a connector mating detection device that can be used in a modular power distribution system that has an electrical bus associated with it The connector mating detection device detects whether power connectors, which have a predetermined length and are adapted to couple a system-compatible module to the electrical bus, have successfully mated. In one particular embodiment, the connector mating device comprises a connector support structure and first and second pins that extend from the connector support structure and have a length less than the predetermined length of the power connectors to prevent the first and second pins from electrically contacting counterpart first and second receptacles until the power connectors have made substantial electrical contact with the electrical bus. The connector mating device may further comprise a detection circuit that senses when the first and second pins and receptacles have cooperated to form a continuous circuit that indicates that the power connectors have made substantial electrical contact with the electrical bus.

Although the present invention has been described in detail, those skilled in the art should understand that they can make various changes, substitutions and alterations herein without departing from the spirit and scope of the invention in its broadest form.

## Claims

1. For use in a power system, a connector mating detection device for detecting whether power connectors having a predetermined length and adapted to conduct power therethrough have successfully mated, comprising:
first and second pins, having a length less than said predetermined length to prevent said first and second pins from electrically contacting counterpart first and second receptacles until said power connectors have made substantial electrical contact; and
a detection circuit that senses when said first and second pins and receptacles have cooperated to form a continuous circuit, said continuous circuit indicating that said power connectors have made substantial electrical contact.

2. The connector mating detection device as recited in Claim 1 wherein said first and second receptacles are electrically coupled together.

3. For use in a power system, a method of detecting whether power connectors having a predetermined length and adapted to conduct power therethrough have successfully mated, comprising the steps of :
preventing first and second pins, having a length less than said predetermined length, from electrically contacting counterpart first and second receptacles until said power connectors have made substantial electrical contact; and
sensing when said first and second pins and receptacles have cooperated to form a continuous circuit, said continuous circuit indicating that said power connectors have made substantial electrical contact.

4. The method as recited in Claim 3, wherein said first and second receptacles are electrically coupled together.

5. A modular high-power distribution system, comprising:
a modular rack having a back plate and configured to receive a system-compatible module therein;
counterpart first and second receptacles coupled to said back plate and configured to receive pins therein;
an electrical bus electrically coupled to said back plate; and
a connector mating detection device for detecting whether power connectors having a predetermined length and adapted to couple said system-compatible module to said electrical bus have successfully mated, including;
a connector support structure coupled to said system-compatible module;
first and second pins, extending from said connector support structure and having a length less than said predetermined length to prevent said first and second pins from electrically contacting said counterpart first and second receptacles until said power connectors have made substantial electrical contact with said electrical bus; and
a detection circuit that senses when said first and second pins and receptacles have cooperated to form a continuous circuit, said continuous circuit indicating that said power connectors have made substantial electrical contact with said electrical bus.

6. The modular high-power distribution system as recited in Claim 5, wherein said first and second receptacles are electrically coupled together.

7. For use in a modular power distribution system having an electrical bus therein, a connector mating detection device for detecting whether power connectors having a predetermined length and adapted to couple a system-compatible module to said electrical bus have successfully mated, comprising:
a connector support structure;
a pin extending from said connector support structure and having a length less than said predetermined length to prevent said pin from electrically contacting a counterpart pin receptacle until said power connectors have made substantial electrical contact with said electrical bus; and
a detection circuit that senses when said pin and receptacle have cooperated to form a continuous circuit, said continuous circuit indicating that said power connectors have made substantial electrical contact with said electrical bus.

8. The modular power distribution system as recited in claim 7, further comprising a ground receptacle and said pin receptacle and said ground receptacle are electrically coupled together.

9. For use in a modular power distribution system having an electrical bus therein, a connector mating detection device for detecting whether power connectors having a predetermined length and adapted to couple a system-compatible module to said electrical bus have successfully mated, comprising:
a connector support structure;
first and second pins, extending from said connector support structure and having a length less than said predetermined length to prevent said first and second pins from electrically contacting counterpart first and second receptacles until said power connectors have made substantial electrical contact with said electrical bus; and
a detection circuit that senses when said first and second pins and receptacles have cooperated to form a continuous circuit, said continuous circuit indicating that said power connectors have made substantial electrical contact with said electrical bus.

10. For use in a modular power distribution system having an electrical bus therein, a method of detecting whether power connectors having a predetermined length and adapted to couple a system-compatible module to said electrical bus have successfully mated, comprising the steps of:
preventing first and second pins, extending from a connector support structure and having a length less than said predetermined length, from mating with counterpart first and second receptacles until said power connectors have made substantial electrical contact; and
sensing when said first and second pins and receptacles have cooperated to form a continuous circuit, said continuous circuit indicating that said power connectors have been successfully mated.
